Europäisches Patentamt

European Patent Office

Office européen des brevets

(11) Veröffentlichungsnummer: **0 233 472**
**A1**

(12) # EUROPÄISCHE PATENTANMELDUNG

(21) Anmeldenummer: **87100484.2**

(22) Anmeldetag: **16.01.87**

(51) Int. Cl.4: **G06K 11/06** , G01S 11/00 , G01S 5/18

(30) Priorität: **23.01.86 CH 265/86**

(43) Veröffentlichungstag der Anmeldung:
**26.08.87 Patentblatt 87/35**

(84) Benannte Vertragsstaaten:
**BE DE FR GB IT NL SE**

(71) Anmelder: **ZELLWEGER USTER AG**
**Wilstrasse 11**
**CH-8610 Uster(CH)**

(72) Erfinder: **De Bruyne, Pieter**
**Probsteistrasse 79**
**CH-8051 Zürich(CH)**

(54) **Vorrichtung zur Bestimmung der Position eines beweglichen Objekts.**

(57) Die Vorrichtung enthält zwei feste Ultraschallsender (1, 2), einen Teil des beweglichen Objekts (M) bildenden Ultraschallempfänger (6) und einen Rechner (4). Durch ein Startsignal (S) vom Rechner (4) werden Ultraschallimpulse (I) an den Ultraschallsender (1, 2) ausgelöst und der Rechner (4) ermittelt aus den Laufzeiten der Ultraschallimpulse (I) von den Ultraschallsendern (1, 2) zum Ultraschallempfänger (6) und aus dem gegenseitigen Abstand der Ultraschallsender (1, 2) die Koordinaten des Ultraschallempfängers (6) und damit des beweglichen Objekts (M).

Die Vorrichtung eignet sich insbesondere für die Steuerung des Cursors auf einem Bildschirm mittels einer sogenannten "Maus" und ermöglicht eine präzise Positionsbestimmung und eine genaue und einfache Koordinatenberechnung und kann damit als sogenannter "Digitizer" zur geometrischen Datenverarbeitung verwendet werden.

FIG. 1

EP 0 233 472 A1

## Vorrichtung zur Bestimmung der Position eines beweglichen Objekts

Auf dem Computermarkt sind bereits viele periphere Arbeitshilfen erhältlich, welche dem Benützer die Steuerung des Cursors auf dem Bildschirm erleichtern. Am beliebtesten davon ist die sogenannte "Maus", durch deren Bewegung die Bewegung des Cursors gesteuert wird. Bisherige Mäuse arbeiten meist nach optischen oder mechanischen Verfahren, wobei die Positionsbestimmung mit Hilfe eines speziellen Tableaus mit speziellen Unterlagen -für Mäuse -oder mit quer über das Tableau gespannten Drähten erfolgte. Da dafür relativ aufwendige mechanische Arbeiten oder die Herstellung spezieller Oberflächen erforderlich sind, deren Kosten mit den Anforderungen an die Genauigkeit und an das Auflösungsvermögen extrem ansteigen, wird seit einiger Zeit nach anderen Systemen zur Positionsbestimmung gesucht.

Die Erfindung betrifft eine Vorrichtung zur Bestimmung der Position eines beweglichen Objekts innerhalb einer vorgegebenen Begrenzung und relativ zu festen Bezugspunkten mit Hilfe von akustischen Signalen, vorzugsweise von Ultraschallimpulsen, mit Sende-und Empfangsmitteln für die Ultraschallimpulse und mit Mitteln zur Bestimmung von deren Laufzeit zwischen dem beweglichen Objekt und den festen Bezugspunkten.

Eine Vorrichtung dieser Art ist in dem Artikel "Zweiohrige Maus" von P. Wendt in "mc Die Mikrocomputer Zeitschrift", Nr. 10/1984, beschrieben. Bei dieser Vorrichtung sind die Empfangsmittel durch Mikrofone gebildet und die Laufzeitmessung erfolgt dadurch, dass mit der Aussendung von Schallimpulsen durch den Sender aufgrund eines Startsignals Zähler gestartet und bei Aufnahme eines Signals durch die Mikrofone gestoppt werden. Dabei muss darauf geachtet werden, dass die Austrittsöffnung des Senders gegen die Mikrofone gerichtet ist, weil sonst eventuell die Laufzeit von Reflexionen bestimmt wird. Aus diesem Grund und auch wegen der relativ grossen Abmessung der Mikrofone ist die Positionsbestimmung nicht sehr genau. Daher kann diese bekannte Vorrichtung auch nicht als sogenannter Digitizer, d.h. als Peripheriegerät für die Eingabe von Koordinaten einer Zeichnung in ein Rechnersystem zur geometrischen Datenverarbeitung, verwendet werden.

Durch die Erfindung soll nun eine Vorrichtung zur Positionsbestimmung angegeben werden, welche sich durch eine möglichst präzise Positionsbestimmung und ein hohes Auflösungsvermögen auszeichnet.

Die erfindungsgemässe Lösung dieser Aufgabe ist dadurch gekennzeichnet, dass die Sende-und Empfangsmittel durch zylindrische Ultraschallwandler gebildet sind.

Die Verwendung zylindrischer Ultraschallwandler erlaubt eine sehr einfache und genaue Berechnung der Koordinaten der Maus und erfordert keine gegenseitige Ausrichtung von Sende-und Empfangsmitteln. Die Präzision der Positionsbestimmung und das Auflösungsvermögen liegen um etwa eine Grössenordnung höher als bei der zitierten "Zweiohrigen Maus".

Die erfindungsgemässe Vorrichtung kann sowohl als verdrahteter als auch drahtloser Cursor verwendet werden, das heisst, das bewegliche Objekt kann entweder mit der Steuereinheit der Vorrichtung über eine Leitung verbunden sein, wodurch sich die Bestimmung der Laufzeit relativ einfach gestaltet, oder es weist keine körperliche Verbindung zur Steuereinheit auf, wodurch die freie Beweglichkeit des Objekts nicht durch eine Leitung eingeschränkt ist.

Gemäss einer ersten bevorzugten Weiterbildung der erfindungsgemässen Vorrichtung sind Mittel zur Aussendung von Impulsen im Bereich des sichtbaren oder unsichtbaren Lichtes zum Zweck der drahtlosen Anzeige des Zeitpunkts der Aussendung oder des Empfangs der Ultraschallimpulse sowie Mittel zur Detektion dieser Lichtimpulse vorgesehen.

Daraus resultiert eine maximale freie Beweglichkeit des beweglichen Objekts und ausserdem macht die erfindungsgemässe drahtlose Anzeige des Zeitpunkts der Aussendung oder des Empfangs der Ultraschallimpulse mittels optischer Impulse die Laufzeitmessung gegen elektrische Störungen weitgehend immun.

Gemäss einer zweiten bevorzugten Weiterbildung der erfindungsgemässen Vorrichtung sind die zylindrischen Ultraschallwandler sogenannte Sellwandler, welche an ihrem Mantel mit einer elektretisierten, auf einer Seite metallisierten Kunststoffolie versehen sind, welche die bewegliche Elektrode eines einen Luftspalt aufweisenden Kondensators bildet.

Dadurch können an die umgebende Luft äusserst kurze Impulse, sogenannte akustische Schockwellen, abgegeben werden, wodurch die Präzision der Berechnung der Maus-Koordinaten weiter verbessert wird.

Nachstehend wird die Erfindung anhand eines in den Zeichnungen dargestellten Ausführungsbeispiels näher erläutert; es zeigen:

Fig. 1 eine Prinzipskizze der erfindungsgemässen Vorrichtung im Grundriss,

Fig. 2 ein Funktionsblockschaltbild der erfindungsgemässen Vorrichtung,

Fig. 3 ein Zeitablaufschema zur Funktionserläuterung,

Fig. 4 eine Draufsicht auf einen Ultraschallwandler,

Fig. 5 einen Schnitt nach der Linie V -V von Fig. 4,

Fig. 6 eine Skizze einer Variante der Vorrichtung von Fig. 1, und

Fig. 7 eine Skizze eines Personal Computers mit einer erfindungsgemässen Vorrichtung

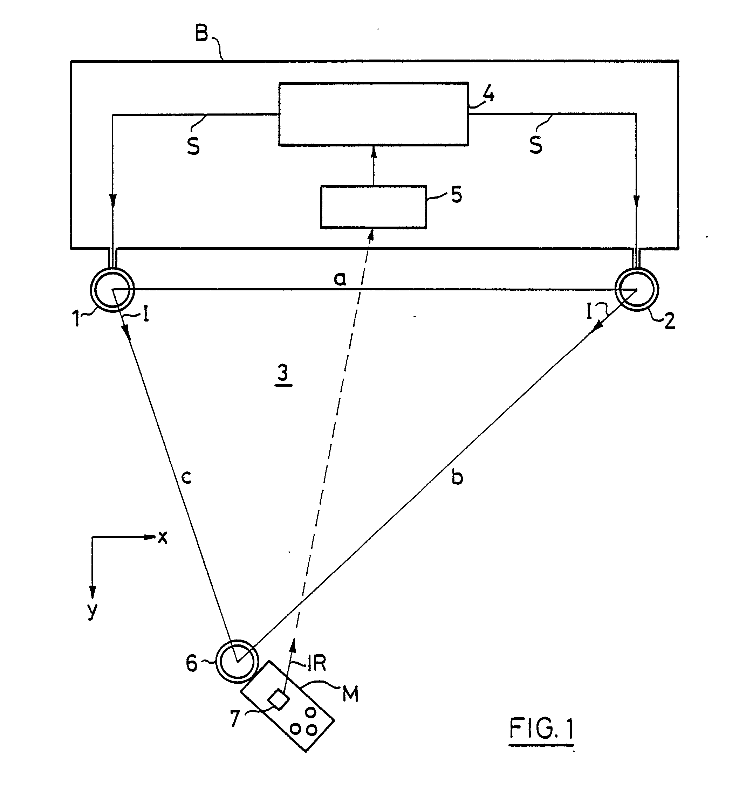

Gemäss Fig. 1 sind zwei Ultraschallsender 1 und 2 zur Messung der Position eines innerhalb einer Fläche 3 manuell beweglichen Objekts M, einer sogenannten Maus, vorgesehen. Die Ultraschallsender 1 und 2 sind Bestandteil der Basisstation B der Vorrichtung, welche ausserdem einen Rechner 4 und einen Infrarotempfänger 5 aufweist. Der Rechner 4 steuert die Ultraschallsender 1 und 2 zur Aussendung von Ultraschallimpulsen I an und ist ausserdem mit dem Infrarotempfänger 5 verbunden.

Die Maus M enthält im wesentlichen einen Ultraschallempfänger 6 und einen Infrarotsender 7. Die Ultraschallsender 1 und 2 weisen in der einen Koordinatenrichtung, darstellungsgemäss in der x-Richtung, einen gegenseitigen Abstand a auf.

Für die Bestimmung der Position der Maus M, bezogen auf ein festes Koordinatensystem x, y, werden nacheinander die Laufzeiten der Ultraschallimpulse I von den Ultraschallsendern 1 bzw. 2 der Basisstation B zum Ultraschallempfänger 6 der Maus M gemessen. Durch Anlegen eines Startimpulses S an den Ultraschallsender 1 oder 2 wird jeweils ein kurzer, genau definierter Ultraschallimpuls I ausgelöst. Gleichzeitig mit dem Startimpuls startet ein Zähler.

Die Ultraschallimpulse I werden vom Ultraschallempfänger 6 der Maus M empfangen, wobei die zeitlichen Abstände zwischen Auslösung und Empfang jedes Ultraschallimpulses I von den räumlichen Abständen b und c des Ultraschallempfängers 6 der Maus M von den Ultraschallsendern 2 bzw. 1 der Basisstation B abhängen. Die empfangenen Ultraschallimpulse I werden in der Maus M in elektrische Signale umgewandelt und es wird das erste Maximum des entsprechenden Signals detektiert. Anhand dieser Detektion sendet der Infrarotsender 7 der Maus M eine Infrarotimpulsfolge IR an die Basisstation B zurück, die von deren Infrarotempfänger 5 empfangen wird und jeweils den Zähler stoppt.

Der Stand des Zählers ist somit für die Laufzeit des entsprechenden Ultraschallimpulses über die Entfernung b bzw. c charakteristisch und damit, bei bekannter Schallgeschwindigkeit, auch für den entsprechenden Abstand b oder c der Maus M vom Sender 2 bzw. 1. Aus den Werten b und c und aus dem bekannten gegenseitigen Abstand a der beiden Ultraschallsender 1 und 2 kann der Rechner 4 die Koordinaten x und y der Maus M mittels folgender Formeln bestimmen:

$x = 2/a.(p-b).p-c$, $y =$ Quadratwurzel aus $(c^2-x^2)$ wobei gilt: $p = (a+b+c)/2$

(Dabei ist vorausgesetzt, dass der Nullpunkt des Koordinatensystems im Zentrum des Ultraschallsenders 1 liegt.)

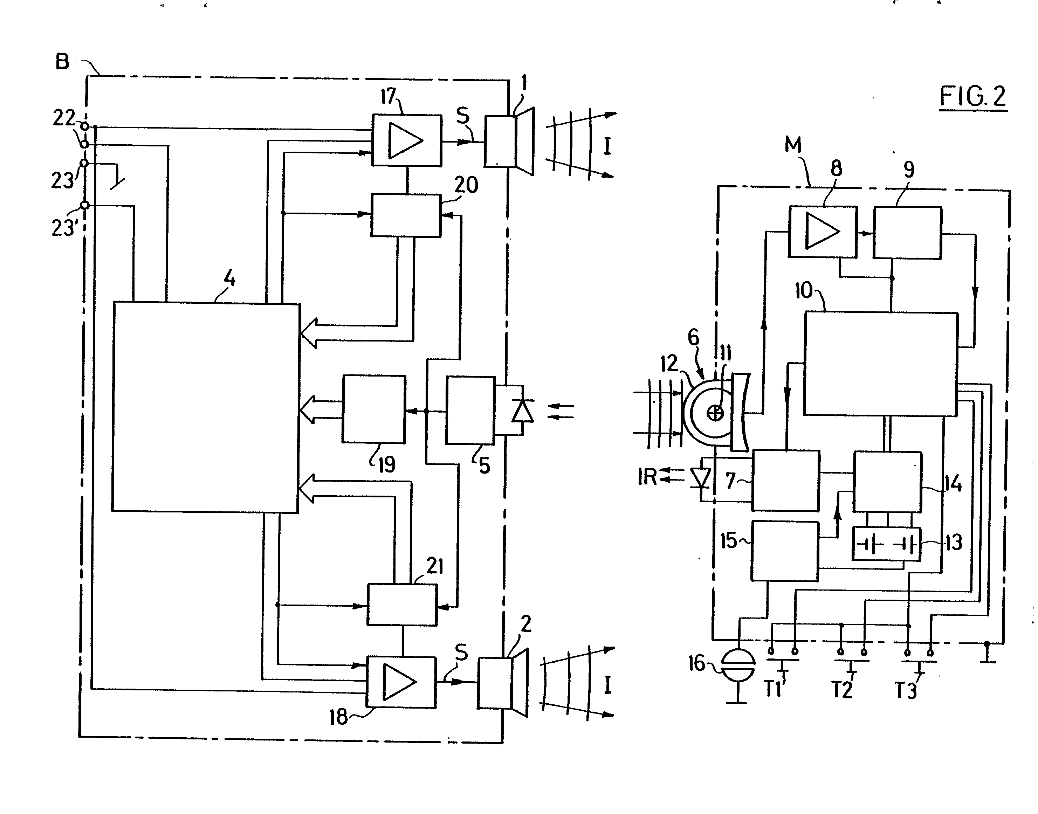

In Fig. 2 ist ein Funktionsblockschaltbild der erfindungsgemässen Vorrichtung mit der Basisstation B und der Maus M dargestellt.

Die Maus M besteht darstellungsgemäss aus drei Funktionsblöcken, aus dem Ultraschallempfänger oder Empfangstransducer 6, aus einem Vorverstärker 8 und einem Maximumdetektor 9 und aus einem digitalen Logikteil 10 und dem Infrarotsender 7.

Der Ultraschallempfänger 6 besitzt die Form eines kurzen Hohlzylinders und weist in seiner Bohrung eine Plexiglasscheibe mit einem Fadenkreuz 11 auf, damit die Maus M genau auf einen bestimmten Punkt positioniert werden kann. Dem Fadenkreuz 11 kann eine Lupe als Positionierunghilfe zugeordnet sein. Der Ultraschallempfänger 6 ist äusserlich vollständig geerdet und durch ein geerdetes Metallgitter 12 vor mechanischen Einwirkungen und sehr starken elektrischen Störungen geschützt.

Damit ein vom Ultraschallempfänger 6 empfangener Ultraschallimpuls anhand seines Maximums oder seines ersten Maximums optimal detektiert werden kann, sollte er ohne vorheriges Unterschwingen möglichst schnell ein Maximum erreichen und ebenso schnell wieder abfallen. Schallimpulsformen, welche diese Bedingungen erfüllen, sind solche, die durch eine Sinuswelle einer halben oder einer ganzen Periode angenähert werden können. Beide Formen sind zulässig, da ja das erste Maximum des Ultraschallimpulses detektiert wird.

Entsprechend diesen zulässigen Schallimpulsformen werden von den Ultraschallsendern 1 und 2 (Fig. 1) Schallimpulse I abgegeben, deren Form durch eine Sinushalbwelle oder eine Sinuswelle angenähert werden kann. Der Ultraschallempfänger 6 wandelt dieses akustische Signal in ein entsprechendes elektrisches Signal um, welches also ebenfalls die Form einer Sinushalbwelle oder einer Sinuswelle hat. Dieses elektrische Signal wird vom Vorverstärker 8 selektiv verstärkt und das erste Maximum dieses verstärkten Signals wird vom Maximumdetektor 9 detektiert. Mit der Detektion des ersten Maximums des dem Ultraschallimpuls entsprechenden verstärkten elektrischen Signals gibt der Maximumdetektor 9 an den digitalen Logikteil 10 ein entsprechendes Signal ab, durch welches die Aussendung einer Infrarotimpulsfolge durch den Infrarotsender 7 gestartet wird, deren Startbit den Zähler der Basisstation stoppt. Das Datenformat der Infrarotimpulsfolge ist so gewählt, dass neben dem Startbit auch die Zustände von drei Betriebstasten T1 bis T3 sowie der Betriebszustand der Maus M seriell zur Basisstation B übertragen werden. Die Impulsbreite eines Impulses der Infrarotimpulsfolge beträgt 10 um, der Abstand von zwei aufeinanderfolgenden Impulsen 64 um, und das Tastverhältnis der Infrarotimpulsfolge somit ungefähr 1:6.

Die Stromversorgung der Maus M erfolgt durch einen durch Batterien 13 gespeisten Speisungsteil 14. Wegen des relativ hohen Stromverbrauchs des durch den Vorverstärker 8 und den Maximumdetektor 9 gebildeten analogen Schaltungsteils muss die Maus M so oft wie möglich abgeschaltet werden. Zu diesem Zweck ist eine spezielle Ein-/Ausschaltlogik 15 mit einem Berührungssensor 16 vorgesehen.

Bei der ersten Berührung der abgeschalteten Maus M wird die Speisespannung für die Elektronik eingeschaltet (Speisungsteil 14) und darnach wird durch den Infrarotsender 7 der Basisstation B eine Infrarotimpulsfolge übermittelt, welche dieser anzeigt, dass die Maus M in Betrieb ist und dass eine Positionsbestimmung vorgenommen werden soll. Wird dann die Maus M innerhalb einer bestimmten Zeit von einigen, beispielsweise 4 Sekunden nicht weiter berührt, dann wird in der Infrarotimpulsfolge ein Abschaltbit gesetzt, wodurch einerseits eine. Abmeldung der Maus M bei der Basisstation B erfolgt und anderseits der Speisungsteil 14 auf Standby-Betrieb umschaltet.

Die Basisstation B besteht darstellungsgemäss aus den Ultraschallsendern oder Sendetransducern 1 und 2, dem Rechner 4, dem Infrarotempfänger 5, zwei elektrischen Impulssendern 17 und 18, einem digitalen Logikteil 19 und aus zwei Zählern 20 und 21. Ausserdem sind zwei Anschlüsse 22 für die Stromversorgung, ein Anschluss 23 zur Erdung der Basisstation B und ein Anschluss 23' für einen Rechner vorgesehen.

Jedesmal, wenn eine Messung gemacht werden soll, erhalten die elektrischen Impulssender 17, 18 ein Startsignal S (Trigger-Signal), mit welchem zugleich der zugehörige Zähler 20 bzw. 21 gestartet wird. Der elektrische Impulssender 17 oder 18 produziert einen geeignet geformten Impuls, welcher auf den zugehörigen Ultraschallsender 1 bzw 2 gegeben wird und die Aussendung eines Ultraschallimpulses I bewirkt. Dann empfängt die Basisstation B ein Infrarotsignal des Infrarotsenders 7 der Maus M, welches im Infrarotempfänger 5 in ein elektrisches Signal umgewandelt wird. Dies gelangt einerseits an den entsprechenden Zähler 20 oder 21 und stoppt diesen und geht anderseits zur digitalen Logikschaltung 19, welche die Information der Infrarotimpulsfolge entschlüsselt und diese in ein Register einliest, wo sie vom Rechner 4 gelesen werden kann.

Wie schon früher erwähnt wurde, laufen die soeben beschriebenen Vorgänge für beide Ultraschallsender 1 oder 2 nacheinander ab, d.h. es wird zuerst die Schallaufzeit vom Ultraschallsender 1 und nachher diejenige vom Ultraschallsender 2 zur Maus M gemessen. Wie ebenfalls schon erwähnt wurde, werden von den Ultraschallsendern 1 und 2 Schallimpulse abgegeben, deren Form durch eine Sinuswelle einer halben oder ganzen Periode angenähert werden kann. Diese Schallimpulse sollen selbstverständlich im hörbaren Bereich möglichst leise sein.

Es hat sich gezeigt, dass diese Forderung durch einen Schallimpuls von der Form einer Sinuswelle einer ganzen Periode sehr gut erfüllt wird. Die Lautstärke des von den Ultraschallsendern 1, 2 ausgelösten "Knalls" lässt sich durch die Verwendung einer derartigen Schallimpulsform soweit reduzieren, dass diese vom üblicherweise herrschenden Bürolärm überdeckt und kaum mehr wahrgenommen wird.

Die Erzeugung dieses Spannungsimpulses erfolgt durch den elektrischen Impulssender 17, 18, der somit die Aufgabe hat, nach einem vom Rechner 4 emp fangenen Startimpuls ein elektrisches Signal mit einer für den Ultraschallsender 1 bzw. 2 geeigneten Form zu produzieren. Dieses Signal ist ein rechteckförmiger Spannungsimpuls mit einer Amplitude von etwa 200 V und einer Dauer von etwa 1,5 us. Der genannte Amplitudenwert ist erforderlich, damit der vom Ultraschallsender 1, 2 ausgesandte Schallimpuls ausreichend stark ist und die Form des Schallimpulses ergibt sich aus den Eigenschaften des Ultraschallsenders 1, 2.

Die Ultraschallsender 1, 2 sind ebenso wie der Ultraschallempfänger 6 der Maus M im Prinzip ein Kondensator mit einem Luftspalt und mit einer festen und einer beweglichen Elektrode. Die bewegliche Elektrode ist eine auf ihrer einen Seite metallisierte Plastikfolie, welche mit ihrer anderen Seite über die feste metallische Elektrode gespannt ist. Dabei bilden die leitende Fläche der Plastikfolie und die feste Elektrode den Kondensator. Wird nun an die Elektroden dieses Kondensators eine Spannung angelegt, so wird die die bewegliche Elektrode bildende Plastikfolie gedehnt und dadurch eine von dieser ausgehende akustische Wellenfront gebildet. Vice versa erzeugt beim Ultraschallempfänger 6 der Maus M die ankommende akustische Wellenfront eine Bewegung der Plastikfolie, welche eine korrespondierende Spannungsänderung zwischen den Elektroden des Kondensators bewirkt. Die Theorie und die Eigenschaften von Ultraschalltransducern sollen hier nicht weiter erörtert werden, es wird in diesem Zusammenhang auf die Publikation "An Ultrasonic Radar Graphic Input Table" von P. de Bruyne in SCIENTIA ELECTRICA, Vol. 30, Fasc. 1 (1984), Seiten 1 bis 26 und auf die in dieser Publikation zitierten Literatustellen verwiesen.

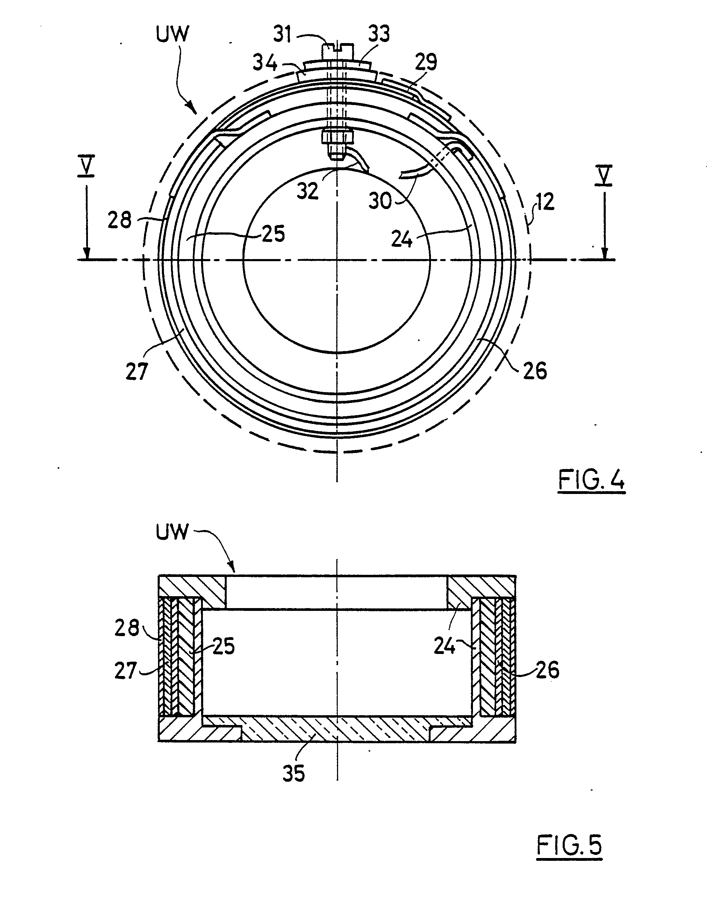

Um eine gute Auflösung zu erhalten, sollten die beiden Ultraschallsender 1 und 2 einen gewissen gegenseitigen Abstand a (Fig. 1) aufweisen. Bei einer praktisch erprobten Ausführungsform ist a = 40 cm. Im übrigen wird bezüglich weiterer Details der Ultraschallsender 1 und 2 auf Fig. 4 und auf die dazugehörige Beschreibung verwiesen.

Der Infrarotempfänger 5 hat die Aufgabe, für jedes empfangene Infrarotsignal ein elektrisches Signal abzugeben, welches dazu verwendet wird, einerseits den entsprechenden Zähler 20 oder 21 zu stoppen und anderseits festzustellen, welche Informationen von der Maus M ausgesandt werden, welche der Tasten T1 bis T3 also gedrückt ist.

Derartige Infrarotempfänger werden heute für die Unterhaltungselektronik in integrierter Bauweise hergestellt. Sie sind für Datenübertragung geeignet und gegenüber Störungen weitgehend unempfindlich. Noch bessere Ergebnisse liefert die Verwendung eines Maximumdetektors (ähnlich wie bei der Detektion des einem Ultraschallimpuls I entsprechenden elektrischen Signals in der Maus M) für den Empfang des Infrarotsignals.

Der digitale Logikteil 19 dient im wesentlichen zur Dekodierung. d.h. zur Seriell/Parallel-Wandlung der empfangenen Infrarot-Daten und zu deren Weiterleitung an den Rechner 4. Der Rechner 4 gibt unter anderem die Startimpulse für die Ultraschallsender 1, 2 an die Impulssender 17 bzw 18 ab und startet die Zähler 20, 21. Ausserdem liefert der Rechner 4 die Pulsrepetitionsfrequenz, d.h. die Frequenz, mit der die einzelnen Schallimpulse gesendet werden. Die beiden Zähler 20 und 21 zählen mit einer Frequenz von 10 MHz, erlauben also eine Zeitmessung auf 0,1 us genau.

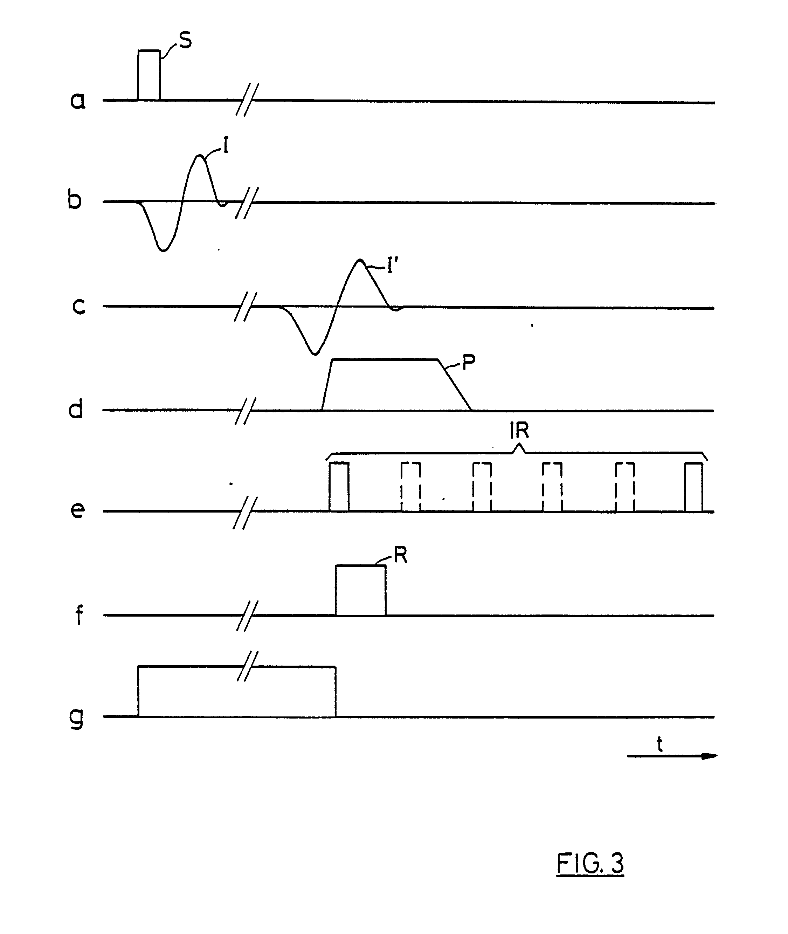

Die Messung der Schallaufzeit von einem Ultraschallsender 1, 2 der Basisstation B zur Maus M ist in Fig. 3 anhand eines Zeitablaufschemas dargestellt, dessen Zeitachse (Abszisse) jedoch nicht massstabgetreu ist.

In Fig. 3 ist in Zeile a der vom Impulssender 17 oder 18 nach Erhalt eines Startbefehls vom Rechner 4 an den Ultraschallsender 1 bzw 2 abgegebene Startimpuls S (Fig. 1) dargestellt. Dieser hat die Form eines Rechtecks mit eines Amplitude von 200 V und einer Länge von 1,5 us. Mit dem Startbefehl des Rechners 4 wird gleichzeitig der zugehörige Zähler 20 oder 21 gestartet (Zeile g).

Der Startimpuls S des Impulssenders 17 oder 18 bewirkt im Ultraschallsender 1 bzw. 2 die Aussendung eines Schallimpulses I von der in Zeile b dargestellten Form einer Sinuswelle. Die Länge des Schallimpulses I beträgt 6,5 us. Der Schallimpuls I löst im Ultraschallempfänger 6 der Maus M ein entsprechendes elektrisches Signal aus, welches vom Vorverstärker 8 verstärkt und dem Maximumdetektor 9 zugeführt wird. Das Ausgangssignal des Vorverstärkers 8 ist in Zeile c dargestellt und mit I' bezeichnet.

Der Maximumdetektor 9 detektiert das erste Maximum des Signals I' und zwar anhand der unmittelbar auf dieses Maximum folgenden positiven Spannungsänderung dieses Signals. Diese Spannungsänderung bewirkt gemäss Zeile d im Maximumdetektor 9 ein annähernd trapezförmiges Signal P, dessen steile Anstiegsflanke gemäss Zeile e das Startbit der Infrarotimpulsfolge IR des Infrarotsenders 7 auslöst. Die einzelnen Impulse der Infrarotimpulsfolge IR haben eine Länge von 10 us und einen gegenseitigen Mittenabstand von 64 us. Im Infrarotempfänger 5 wird die empfangene Infrarotimpulsfolge IR in ein TTL-Signal R umgewandelt (Zeile f), dessen positive Flanke den Zähler 20 oder 21 stoppt (Zeile g).

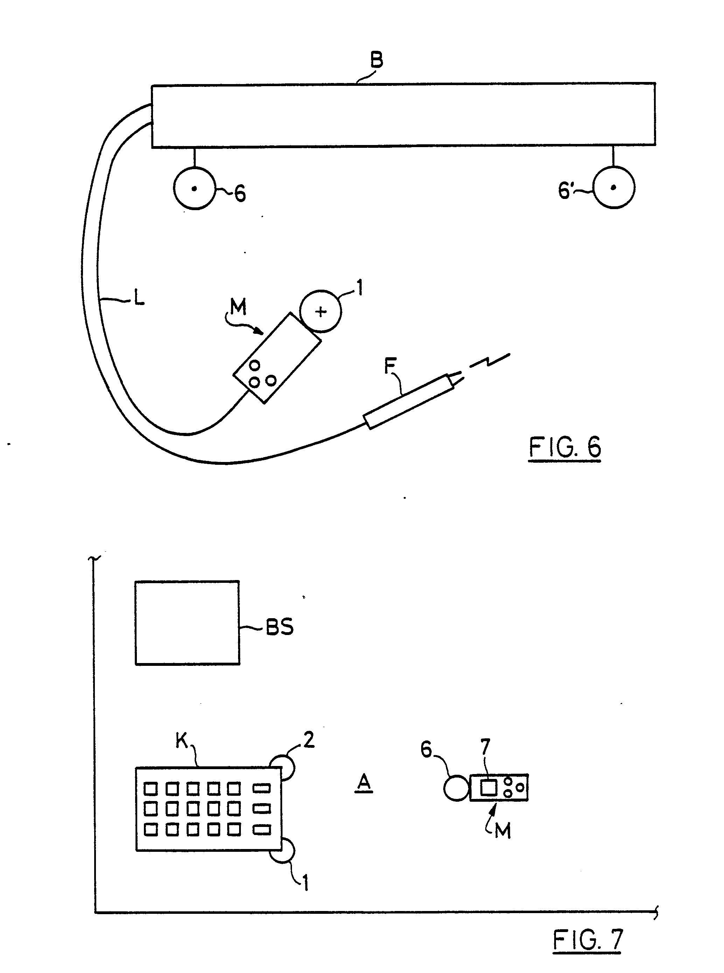

Die Fig. 4 und 5 zeigen einen Ultraschallwandler UW, der mit geringfügigen Modifikationen sowohl als Ultraschallsender 1, 2 als auch Ultraschallempfänger 6 (Fig. 2) verwendet wird; Fig. 4 zeigt eine Draufsicht (mit abgenommenem Oberteil) und Fig. 5 zeigt eine Schnittdarstellung, beide jeweils im Masstab von etwa 2:1.

Der Ultraschallwandler ist ein sogenannter Sellwandler von zylindrischer Form und ist im Prinzip ein Kondensator mit einem Luftspalt, wobei die eine Elektrode dieses Kondensators fest und die andere beweglich ist. Durch die zylindrische Form wird die Genauigkeit der Laufzeitmessung der Ultraschallimpulse erhöht und ausserdem ist diese Laufzeitmessung nicht richtungsabhängig.

Darstellungsgemäss besteht der Ultraschallwandler UW aus einem aus zwei ringartigen Teilen aus einem geeigneten Material wie beispielsweise Aluminium gebildeten Träger 24, aus einem vom Träger 24 gehaltenen Kunststoffring 25 aus Plexiglas, auf dessen Aussenfläche mittels einer Klebschicht 26 eine etwa 0,1 mm dicke Metallfolie 27, beispielsweise eine Kupferfolie, appliziert ist, und aus einer an der Metallfolie 27 aussen anliegenden und an ihrer Aussenseite metallbeschichteten Kunststoffolie 28. Die Folie 28 ist beispielsweise eine mit Aluminium beschichtete Polypropylenfolie mit einer Dicke von 10 um.

Die Kupferfolie 27 weist eine aufgerauhte Oberfläche auf, wodurch zwischen den beiden Elektroden 27 und 28 ein Luftspalt von etwa 20 um besteht. Die Kunststoffolie 28 ist elektretisiert, weist also eine innere Polarisation auf, wodurch sowohl in der Metallschicht der Kunststoffolie 28 als auch in der Kupferfolie 27 Influenz entsteht, also entgegengesetzte Ladungen erzeugt werden. Dadurch haftet die Kunststoffolie 28 stark an der Kupferfolie 27 und befestigt sich somit praktisch selbst an dieser.

Wie man Fig. 4 entnehmen kann, bedeckt die Kupferfolie 27 nicht den ganzen Umfang von 360° des Kunststoffrings 25, sondern nur etwa 260°, der wirksame Bereich des Ultraschallwandlers UW beträgt dementsprechend etwa 210°. Die Länge der Kunststoffolie 28 ist so bemessen, das sich ihre Enden überlappen, so dass das aussen liegende Folienende an der darunter liegenden Folie mit einem elastischen Klebeband 29 befestigt werden kann.

Die Kupferelektrode 27 ist an ihrer Innenseite mit einer gefächerten, feinen Litze 30 verlötet, welche durch eine Bohrung im Kunststoffring 25 in den Innenraum des Ultraschallwandlers UW geführt ist. Die Kontaktierung der beweglichen Elektrode, der Kunststoffolie 28, erfolgt durch eine Schraube 31, an welcher einerseits eine Litze 32 angelötet ist und welche anderseits über eine Metallscheibe 33 und ein graphitiertes Plastikgewebe 34 mit der Metallschicht der Kunststoffolie 28 elektrisch leitend verbunden ist. Aussen ist der Ultraschallwandler UW mit einem metallischen Schutzgitter 12 umgeben.

Der in Fig. 5 dargestellte Ultraschallwandler UW entspricht im wesentlichen der Ausführungsform für den Ultraschallempfänger 6 - (Fig. 2) und trägt an seinem Boden eine mit dem Fadenkreuz 11 (Fig. 2) versehene Scheibe 35 aus Plexiglas. Wenn als weitere Positionierungshilfe eine Lupe verwendet wird, dann liegt diese oberhalb der Scheibe 35.

Bei der Verwendung als Ultraschallsender 1, 2 (Fig. 1) ist der Ultraschallwandler UW an seiner Boden-und Deckenfläche je mit einem Aluminiumdeckel versehen und der Trägerkörper 24 ist entsprechend modifiziert und ist ausserdem so ausgelegt, dass der Impulssender 17, 18 (Fig. 2) in den Ultraschallwandler UW eingebaut werden kann.

Das in Fig. 2 dargestellte Funktionsblockschaltbild der Basisstation B der Maus M ist als Ausführungsbeispiel zu verstehen und kann selbstverständlich variiert werden. So brauchen beispielsweise bei Verwendung des Rechners 4 nicht zwei Zähler 20 und 21 vorhanden sein, sondern es genügt auch ein Zähler. Ausserdem könnte die Zeitmessung auch mit einem programmierten Countertimer auf dem Rechner 4 erfolgen. Der Rechner 4 ist durch einen handelsüblichen Personal Computer gebildet, der entweder alle Berechnungen selber durchführt oder dem ein separater Mikroprozessor für die Auswertung der Schallaufzeiten und Berechnung der Koordinaten zugeordnet ist. Die vorzuziehende Lösung richtet sich nach dem Aufwand einerseits und nach der Flexibilität und der Anschlussmöglichkeit an andere Systeme anderseits.

Wesentlich für die beschriebene Vorrichtung zur Positionsbestimmung sind in erster Linie die zylindrischen Ultraschallwandler, die die Laufzeitmessung richtungsunabhängig machen. Vorteilhaft sind auch der Infrarotsender 7 und der Infrarotempfänger 5 für die drahtlose Anzeige des Zeitpunkts des Empfangs der Ultraschallimpulse.

Ausserdem ist auch der Aufbau der Ultraschallwandler, insbesondere die Verwendung der elektretisierten Folie als bewegliche und aufgerauhte feste Elektrode, von wesentlicher Bedeutung, weil dadurch äusserst kurze Schallimpulse abgegeben werden können.

Selbstverständlich könnte auch der Ultraschallsender in der Maus und die Ultraschallempfänger, von denen dann zwei Exemplare erforderlich wären, in der Basisstation angeordnet sein. Infrarotsender und Infrarotempfänger wären ebenfalls entsprechend vertauscht. Es ist auch möglich, den Infrarotsender am Ort des oder der Ultraschallsender und den Infrarotempfängern am Ort des oder der Ultraschallempfänger anzuordnen. In diesem Fall würde gleichzeitig mit dem Ultraschallimpuls ein Infrarotsignal ausgesandt werden und die Laufzeit könnte aus den unterschiedlichen Empfangszeitpunkten von Ultraschall-und Infrarotsignal berechnet werden.

Wie schon in der Beschreibungseinleitung erwähnt wurde, kann die erfindungsgemässe Vorrichtung sowohl als drahtloser als auch verdrahteter Cursor verwendet werden. Während in den Fig. 1 und 2 eine drahtlose Ausführungsform beschrieben ist, zeigt Fig. 6 eine solche mit einem Drahtcursor.

Gemäss Fig. 6 sind an die Basisstation B zwei fixe Ultraschallempfänger 6, 6' angeschlossen und der Cursor oder die Maus M enthält einen - (beweglichen) Ultraschallsender 1. Cursor oder Maus M sind mit der Basisstation B über eine Leitung L verbunden. Diese Anordnung hat den Vorteil, dass nur ein Ultraschallsender erforderlich ist. Daher werden die beiden Entfernungen b und c (Fig. 1) simultan gemessen und die Abtastfrequenz für eine gegebene Arbeitsfläche kann verdoppelt werden. Beispielsweise ergibt sich für ein Arbeitsfeld von 1 m eine Abtastrate von 250 Koordinaten pro Sekunde. Ausserdem kann anstelle des Cursors oder der Maus M darstellungsgemäss auch ein ebenfalls über eine Leitung an die Basisstation B angeschlossener Funkengriffel F verwendet werden. Geeignete Funkengriffel F sind aus der Literatur bekannt, siehe beispielsweise US Patent Nr. 3 838 212 und IEEE TRANSACTIONS ON COMPUTERS, Vol. C-19, Nr. 6, Juni 1970, S. 546-548, "A Sonic Pen: A Digital Stylus System" von A.E. Brenner und P. de Bruyne.

Wenn man eine Maus der gegenwärtig erhältlichen und üblichen Art zusammen mit einem Personal Computer verwenden möchte, dann ist es nicht möglich, Daten einer graphischen Vorlage in den Computer einzugeben, sondern man benötigt dazu ein sogenanntes Digitizer-Tableau. Dieses stellt eine zusätzliche Einheit von beträchtlicher Grösse dar, die praktisch nicht in den Personal Computer oder in das Tastenfeld integriert werden kann. Wenn man jedoch die beschriebenen Ultraschallwandler UW (Fig. 4, 5) verwendet, ist kein Tableau erforderlich und die Ultraschallsender und die Steuerelektronik können in den Personal Computer integriert werden.

Eine derartige Applikation der beschriebenen Positionierungsvorrichtung mit einem durch einen Bildschirm BS und ein Tastenfeld K symbolisierten Personal Computer ist in Fig. 7 schematisch dargestellt. Die Ultraschallsender 1 und 2 sind mit der Basisstation B (Fig. 2) zusammengefasst und bilden eine Unterlage für das Tastenfeld K. Der Platz auf dem Tisch A neben dem Tastenfeld K kann als "Tableau" verwendet werden, auf dem die drahtlose Maus M oder der drahtlose Cursor mit dem Ultraschallempfänger 6 und dem Infrarotsender 7 ohne Einschränkungen bewegt werden kann. Der Cursor und die Unterlage unter dem Tastenfeld K mit den Ultraschallsendern 1 und 2 und der Basisstation haben kleine Abmessungen und stören in keiner Weise wenn das Arbeitsfeld des Cursors für andere Zwecke benötigt wird. Diese Bequemlichkeit, die bisher nur Maus-Anordnungen, nicht aber Digitizer ausgezeichnet hat, ist ein ganz wesentlicher Vorteil der erfindungsgemässen Vorrichtung, die ja als Digitizer verwendet werden kann.

**Ansprüche**

1. Vorrichtung zur Bestimmung der Position eines beweglichen Objekts innerhalb einer vorgegebenen Begrenzung und relativ zu festen Bezugspunkten mit Hilfe von akustischen Signalen, vorzugsweise von Ultraschallimpulsen, mit Sende-und Empfangsmitteln für die Ultraschallimpulse und mit Mitteln zur Bestimmung von deren Laufzeit zwischen dem beweglichen Objekt und den festen Bezugspunkten, dadurch gekennzeichnet, dass die Sende-und Empfangsmittel (1, 2 bzw. 6) durch zylindrische Ultraschallwandler (UW) gebildet sind.

2. Vorrichtung nach Anspruch 1, dadurch gekennzeichnet, dass Mittel (7) zur Aussendung von Impulsen (IR) im Bereich des sichtbaren oder infraroten Lichtes zum Zweck der drahtlosen Anzeige des Zeitpunkts der Aussendung oder des Empfangs der Ultraschallimpulse (I) sowie Mittel (15) zur Detektion dieser Lichtimpulse vorgesehen sind.

3. Vorrichtung nach Anspruch 2, dadurch gekennzeichnet, dass die zylindrischen Ultraschallwandler (UW) sogenannte Sellwandler sind, welche an ihrem Mantel mit einer elektretisierten, auf einer Seite metallisierten Kunststoffolie (28) versehen sind, welche die bewegliche Elektrode eines einen Luftspalt aufweisenden Kondensators bildet.

4. Vorrichtung nach Anspruch 2, dadurch gekennzeichnet, dass die zylindrischen Ultraschallwandler (UW) an ihrem Mantel mit einer Metallfolie oder einer an ihrer Innenseite metallisierten Kunststoffolie versehen sind, welche die bewegliche Elektrode eines Kondensators bildet, dessen feste Elektrode durch eine an ihrer Innenseite metallisierte PVDF Elektretfolie gebildet ist.

5. Vorrichtung nach Anspruch 2 oder 3, dadurch gekennzeichnet, dass mindestens zwei den festen Bezugspunkten zugeordnete und als Ultraschallsender (1, 2) wirkende Ultraschallwandler (UW) und mindestens ein dem beweglichen Objekt (M) zugeordneter und als Ultraschallempfänger (6) wirkender Ultraschallwandler vorgesehen sind.

6. Vorrichtung nach Anspruch 5, dadurch gekennzeichnet, dass die Funktion der Ultraschallsender (1, 2) und des Ultraschallempfängers - (6) vertauscht sind.

7. Vorrichtung nach Anspruch 3, dadurch gekennzeichnet, dass die feste Elektrode der Ultraschallwandler (UW) durch eine auf einem Träger - (25) aufgespannte Metallfolie (27) gebildet ist, deren der metallisierten Kunststoffolie (28) zugewandte Oberfläche zum Zweck der Bildung des Luftspalts zwischen beiden Elektroden eine aufgerauhte Struktur aufweist.

8. Vorrichtung nach Anspruch 5, dadurch gekennzeichnet, dass jedem Ultraschallsender (1, 2) ein elektrischer Impulssender (17 bzw. 18) zugeordnet ist, und dass die elektrischen Impulssender in den jeweiligen Ultraschallsender baulich integriert sind.

9. Vorrichtung nach Anspruch 5 oder 8, dadurch gekennzeichnet, dass der gewünschte Schallimpuls (I) annähernd die Form einer Periode einer Sinuswelle aufweist.

10. Vorrichtung nach Anspruch 9, dadurch gekennzeichnet, dass die Ultraschallsender (1, 2) Bestandteil einer festen Basisstation (B) bilden, dass der Ultraschallempfänger (6) am beweglichen Objekt, einer sogenannten Maus (M) angeordnet ist, und dass die Maus ausserdem einen Infrarotsender (7) zur Abgabe eines den Zeitpunkt des Empfangs eines Ultraschallimpulses anzeigenden Signals (IR) und die Basisstation einen Infrarotempfänger (5) sowie einen Rechner (4) aufweist.

11. Vorrichtung nach Anspruch 9, dadurch gekennzeichnet, dass der Rechner (4) zur Ermittlung der rechtwinkeligen Koordination des beweglichen Objekts (M) in Relation zu den festen Bezugspunkten ausgebildet ist.

12. Vorrichtung nach Anspruch 11, dadurch gekennzeichnet, dass die Maus (M) einen Maximumdetektor (9) zur Detektion des Zeitpunkts des ersten Maximums eines empfangenen Ultraschallimpulses (I') aufweist, und dass die Aussendung des Signals (IR) des Infrarotsenders (7) anhand des Detektionssignals des Maximumdetektors erfolgt.

13. Vorrichtung nach Anspruch 12, dadurch gekennzeichnet, dass die Basisstation (B) den Ultraschallsendern (1, 2) zugeordnete Zähler (20 bzw. 21) aufweist, welche jeweils durch das Startsignal an den elektrischen Impulssender (17, 18) aktiviert und durch ein vom Infrarotempfänger (5) empfangenes Signal (IR) des Infrarotsenders (7) gestoppt werden.

14. Vorrichtung nach Anspruch 13, dadurch gekennzeichnet, dass die Zähler (20, 21) Bestandteil des Rechners (4) bilden.

15. Vorrichtung nach Anspruch 10, dadurch gekennzeichnet, dass die Stromversorgung der Maus (M) durch Batterien erfolgt.

16. Vorrichtung nach Anspruch 11, dadurch gekennzeichnet, dass die Maus (M) an den Infrarotsender (7) angeschlossene Bedienungstasten (T1 bis T3) aufweist, denen je ein verschiedener, das Signal (IR) des Infrarotsenders beeinflussender Code zugeordnet ist.

17. Vorrichtung nach Anspruch 10, dadurch gekennzeichnet, dass die Maus (M) eine Positionierungshilfe zur Positionierung der Maus auf einen gewünschten Punkt eines Vorlagenfeldes aufweist.

18. Vorrichtung nach Anspruch 17, dadurch gekennzeichnet, dass die Positionierungshilfe am Ultraschallempfänger (6), vorzugsweise in einer den Durchblick auf das Vorlagenfeld ermöglichenden Ausnehmung oder Durchbrechung in dessen Zentrum, angeordnet ist.

19. Vorrichtung nach Anspruch 18, dadurch gekennzeichnet, dass die Positionierungshilfe durch ein in die genannte Ausnehmung oder Durchbrechung eingesetztes transparentes Fenster (35) mit einem Fadenkreuz (11) gebildet ist.

20. Vorrichtung nach Anspruch 15, dadurch gekennzeichnet, dass die Maus (M) einen Berührungssensor (16) zum gesteuerten Ein- und Ausschalten der Speisespannung aufgrund von nach einer Ruhepause erfolgenden bzw. innerhalb einer bestimmten Zeitspanne nicht erfolgenden Manipulationen einer Bedienungsperson aufweist.

21. Vorrichtung nach Anspruch 1, dadurch gekennzeichnet, dass die Ultraschallwandler (UW) Wandler des eine keramikbeschichtete Membran aufweisenden Typs sind.

22. Vorrichtung nach einem der Ansprüche 10 bis 20 zur Verwendung als sogenannter Digitizer in Verbindung mit einem ein über eine flexible Leitung angeschlossenes Tastenfeld aufweisenden Rechner, insbesondere mit einem Personal Computer, dadurch gekennzeichnet, dass die Basisstation (B) mit den Ultraschallsendern (1, 2) in ihren Abmessungen auf das Tastenfeld (K) abgestimmt und als Unterlage für dieses ausgebildet ist.

FIG. 1

FIG.2

FIG. 3

FIG.4

FIG.5

FIG. 6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 265 141 (THOMSON CSF) * Figur 2; Seite 2, Zeilen 12-31; Seite 4, Zeilen 5-20; Figur 3 * | 1,21 | G 06 K 11/06 G 01 S 11/00 G 01 S 5/18 |
| Y | | 2,3 | |
| | --- | | |
| Y | US-A-4 264 978 (WHIDDEN) * Insgesamt * | 2,3 | |
| A | | 10,13, 16 | |
| | --- | | |
| Y | US-A-4 081 626 (MUGGLI et al.) * Zusammenfassung; Figuren 1,2; Spalte 3, Zeile 31 - Spalte 4, Zeile 43 * | 3 | |
| | | | **RECHERCHIERTE SACHGEBIETE (Int. Cl.4)** |
| | --- | | |
| A | US-A-4 041 446 (LIEBERMANN) * Zusammenfassung; Figuren 6-8; Spalte 4, Zeile 67 - Spalte 5, Zeile 9 * | 1 | G 06 K 11/06 G 01 S 11/00 G 01 S 5/18 G 01 H 11/06 |
| | --- | | |
| A | GB-A-2 062 228 (P. DE BRUYNE) * Zusammenfassung; Figuren 5-7; Seite 3, Zeile 78 - Seite 4, Zeile 12 * | 1,3-5 | |
| | --- | | |
| A | US-A-4 012 588 (DAVIS et al.) * Zusammenfassung; Figur 1 * | 1,5 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 28-04-1987 | CERVANTES J.P.J. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Ci 4) |
|---|---|---|---|
| A | FR-A-2 551 542 (G. ENCAUSSE) <br><br> * Zusammenfassung; Figur 5 * <br><br> --- | 1,5,10 ,17,22 | |
| A | PROCEEDINGS OF THE FALL JOINT COMPUTER CONFERENCE, San Francisco, 7.-10. November 1966, Seiten 223-227, Spartan books, Washington, US (A.F.I.P.S. conference proceedings, Band 29); L.G. ROBERTS: "The Lincoln wand" <br> * Seite 223 * <br><br> --- | 1,5 | |
| D,A | SCIENTIA ELECTRICA, Band 30, Nr. 1, 1984, Seiten 1-26, Birkhäuser Verlag, Basel, CH; P. DE BRUYNE: "An ultrasonic radar graphic input tablet" <br> * Insgesamt * <br><br> ----- | 1,3,4, 7 | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 28-04-1987 | CERVANTES J.P.J. |